(19) Europäisches Patentamt
European Patent Office
Office européen des brevets

(11) **EP 3 026 913 A1**

(12) **EUROPEAN PATENT APPLICATION**

(43) Date of publication:
**01.06.2016 Bulletin 2016/22**

(51) Int Cl.:
**H04N 19/33** *(2014.01)*

(21) Application number: **14306911.0**

(22) Date of filing: **27.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Thomson Licensing
92130 Issy-les-Moulineaux (FR)**
• **INRIA - Institut National de Recherche en
Informatique et en Automatique
78150 Le Chesnay (FR)**

(72) Inventors:
• **Le Pendu, Mikael
35576 Cesson-Sévigné (FR)**

• **Turkan, Mehmet
35576 Cesson-Sévigné (FR)**
• **Guillemot, Christine
35042 Rennes (FR)**
• **Thoreau, Dominique
35576 Cesson-Sévigné (FR)**
• **Racape, Fabien
35576 Cesson-Sévigné (FR)**

(74) Representative: **Huchet, Anne
Technicolor
1, rue Jeanne d'Arc
92443 Issy-les-Moulineaux Cedex (FR)**

(54) **Scalable encoding and decoding methods and corresponding devices with combined intraprediction and interlayer prediction**

(57)     A scalable encoding method is disclosed that comprises for at least one block of an enhancement layer picture:
- determining prediction information from at least a part of the enhancement layer picture spatially neighboring said at least one block of the enhancement layer picture and from a collocated part in a reconstructed base layer picture;

- transforming, using the prediction information, a block of the reconstructed base layer picture collocated with said at least one block of the enhancement layer picture to form a prediction block; and
- encoding a residual block obtained from said at least one block of the enhancement layer picture and from said prediction block.

FIGURE 2

**Description**

1. TECHNICAL FIELD

In the following, a method and a device for encoding at least one block of an enhancement layer picture are disclosed. Corresponding decoding method and decoding device are further disclosed.

2. BACKGROUND ART

In scalable video coding/decoding, enhancement layer pictures may be predicted from reconstructed base layer pictures. This is known as inter-layer prediction. In the case where the enhancement layer pictures and the base layer pictures are represented with different dynamic range (e.g. the enhancement layer pictures being high dynamic range pictures and the base layer pictures being low dynamic range pictures), the reconstructed base layer pictures are inverse tone mapped foruse during inter-layer prediction. Known methods suggest determining an inverse tone mapping curve on the encoder side and transmiting the curve or parameters of the curve (e.g. a slope and an offset in case of a linear curve) in the stream for use by a decoder. Transmitting such curves/parameters for each coding unit, e.g. for each block, increases the coding cost.

3. BRIEF SUMMARY

A scalable encoding method is disclosed that comprises for at least one block of an enhancement layer picture:

- determining prediction information from at least a part of the enhancement layer picture spatially neighboring said at least one block of the enhancement layer picture and from a collocated part in a reconstructed base layer picture;
- transforming, using the prediction information, a block of the reconstructed base layer picture collocated with said at least one block of the enhancement layer picture to form a prediction block; and
- encoding a residual block obtained from said at least one block of the enhancement layer picture and from said prediction block.

A scalable coding device is disclosed that comprises at least a processor configure to:

- determine prediction information from at least a part of an enhancement layer picture spatially neighboring at least one block of an enhancement layer picture and from a collocated part in a reconstructed base layer picture;
- transform, using the prediction information, a block of the reconstructed base layer picture collocated with said at least one block of the enhancement layer picture to form a prediction block; and
- encode a residual block obtained from said at least one block of the enhancement layer picture and from said prediction block.

A scalable coding device is disclosed that comprises:

- means for determining prediction information from at least a part of an enhancement layer picture spatially neighboring at least one block of an enhancement layer picture and from a collocated part in a reconstructed base layer picture;
- means for transforming, using the prediction information, a block of the reconstructed base layer picture collocated with said at least one block of the enhancement layer picture to form a prediction block; and
- means for encoding a residual block obtained from said at least one block of the enhancement layer picture and from said prediction block.

The scalable coding devices are configured to execute the steps of the scalable coding method according to any of the embodiments and variants disclosed.

A non-transitory program storage device, readable by a computer, tangibly embodying a program of instructions executable by the computer to perform a method comprising:

- determining prediction information from at least a part of the enhancement layer picture spatially neighboring said at least one block of the enhancement layer picture and from a collocated part in a reconstructed base layer picture;
- transforming, using the prediction information, a block of the reconstructed base layer picture collocated with said at least one block of the enhancement layer picture to form a prediction block; and
- encoding a residual block obtained from said at least one block of the enhancement layer picture and from said prediction block.

The following embodiments and variants apply to all the scalable encoding method, scalable coding devices and non-transitory program storage device disclosed above.

In an embodiment, determining said prediction information comprises associating, for each pixel in the part of the enhancement layer picture, its value with the value of the collocated pixel in the image part of the reconstructed base layer picture.

In a first specific embodiment, in the case where different pixel values in the enhancement layer image part are associated with one and the same pixel value in the collocated base layer image part, the different pixel values are combined into a single value.

In an exemplary embodiment, the single value is a median or a mean value.

In a specific embodiment, in the case where the prediction information is incomplete, the method further comprise completing said prediction information by interpolation.

In a second specific embodiment, determining said prediction information further comprises determining a linear spline from said associated values.

In an exemplary embodiment, the prediction information is an inverse tone mapping information.

According to a specific characteristic, the reconstructed base layer is a low dynamic range picture and the enhancement layer picture is a high dynamic range picture.

A scalable decoding method is further disclosed that comprises for at least one block of an enhancement layer picture:

- determining prediction information from an enhancement layer image part spatially neighboring said at least one block of the enhancement layer picture and from a collocated base layer image part in a decoded base layer picture;
- transforming, using the prediction information, a block of the decoded base layer picture collocated with said at least one block of the enhancement layer picture to form a prediction block; and
- decoding said at least one block of an enhancement layer picture from said prediction block and from a residual block.

A scalable decoding device is disclosed that comprises at least a processor configure to:

- determine prediction information from an enhancement layer image part spatially neighboring at least one block of an enhancement layer picture and from a collocated base layer image part in a decoded base layer picture;
- transforming, using the prediction information, a block of the decoded base layer picture collocated with said at least one block of the enhancement layer picture to form a prediction block; and
- decoding said at least one block of an enhancement layer picture from said prediction block and from a residual block.

A scalable decoding device is disclosed that comprises:

- means for determining prediction information from an enhancement layer image part spatially neighboring at least one block of an enhancement layer picture and from a collocated base layer image part in a decoded base layer picture;
- means for transforming, using the prediction information, a block of the decoded base layer picture collocated with said at least one block of the enhancement layer picture to form a prediction block; and
- means for decoding said at least one block of an enhancement layer picture from said prediction block and from a residual block.

The scalable decoding devices are configured to execute the steps of the scalable decoding method according to any of the embodiments and variants disclosed.

A non-transitory program storage device, readable by a computer, tangibly embodying a program of instructions executable by the computer to perform a method comprising:

- determining prediction information from an enhancement layer image part spatially neighboring said at least one block of the enhancement layer picture and from a collocated base layer image part in a decoded base layer picture;
- transforming, using the prediction information, a block of the decoded base layer picture collocated with said at least one block of the enhancement layer picture to form a prediction block; and
- decoding said at least one block of an enhancement layer picture from said prediction block and from a residual block.

The following embodiments and variants apply to all the scalable decoding method, scalable decoding devices and non-transitory program storage device disclosed above.

In an embodiment, determining said prediction information comprises associating, for each pixel in the part of the enhancement layer picture, its value with the value of the collocated pixel in the image part of the reconstructed base layer picture.

In a first specific embodiment, in the case where different pixel values in the enhancement layer image part are associated with one and the same pixel value in the collocated base layer image part, the different pixel values are combined into a single value.

In the exemplary embodiment, the single value is a median or a mean value. In a specific embodiment, in the case where the prediction information is incomplete, the method further comprise completing said information by interpolation.

In a second specific embodiment, determining said prediction information further comprises determining a linear spline model from said associated values.

In the exemplary embodiment, the prediction information is an inverse tone mapping information.

According to a specific characteristic, the reconstructed base layer is a low dynamic range picture and the enhancement layer picture is a high dynamic range picture.

A computer program product comprising program code instructions to execute the steps of the scalable encoding method according to any of the embodiments and variants disclosed when this program is executed on a computer.

A computer program product comprising program code instructions to execute the steps of the scalable decoding method according to any of the embodiments and variants disclosed when this program is executed on a computer.

A processor readable medium having stored therein instructions for causing a processor to perform at least the steps of the encoding according to any of the embodiments and variants disclosed.

A processor readable medium having stored therein instructions for causing a processor to perform at least the steps of the decoding method according to any of the embodiments and variants disclosed.

4. BRIEF SUMMARY OF THE DRAWINGS

- Figure 1 represents an exemplary architecture of a scalable encoding device configured to encode at least one block of an enhancement layer picture in a bitstream according to a specific and non-limitative embodiment;
- Figure 2 represents a flowchart of a scalable encoding method for encoding at least one block of an enhancement layer picture according to a specific and non-limitative embodiment;
- Figure 3 depicts a current block in an enhancement layer picture and a spatially collocated block in a reconstructed (or decoded) base layer picture;
- Figure 4 depicts a part of the enhancement layer picture and a spatially collocated part in a reconstructed (or decoded) base layer picture;
- Figure 5 depicts the prediction information in the form of a look-up table;
- Figure 6 depicts the prediction information in the form of a linear spline;
- Figure 7 represents an exemplary architecture of a decoding device configured to decode at least one block of an enhancement layer picture from a bitstream according to an exemplary embodiment; and
- Figure 8 represents a flowchart of a scalable decoding method for decoding at least one block of an enhancement layer picture according to a specific and non-limitative embodiment.

5. DETAILED DESCRIPTION

In the following, the word "reconstructed" and "decoded" can be used interchangeably. Usually, the word "reconstructed" is used on the encoder side while the word "decoded" is used on the decoder side. It will be appreciated that the present principles are not restricted to square blocks in an enhancement layer.

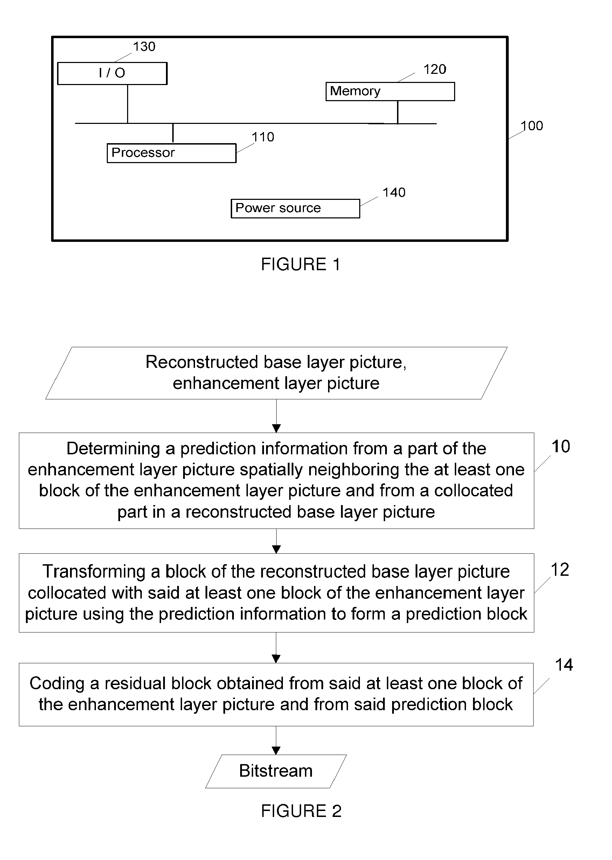

**Figure 1** represents an exemplary architecture of a scalable encoding device 100 configured to encode at least one block of an enhancement layer picture in a bitstream according to an exemplary and non limiting embodiment. The encoding device 100 comprises one or more processor(s) 110 , which could comprise, for example, a CPU, a GPU and/or a DSP (English acronym of Digital Signal Processor), along with internal memory 120 (e.g. RAM, ROM, and/or EPROM). The encoding device 100 comprises one or more Input/Output interface(s) 130, each adapted to display output information and/or allow a user to enter commands and/or data (e.g. a keyboard, a mouse, a touchpad, a webcam); and a power source 140 which may be external to the encoding device 100. The device 100 may also comprise one or more network interface(s) (not shown). The enhancement layer picture or the at least one block of the enhancement layer picture may be obtained from a source. According to different embodiments, the source can be, but is not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and

- an image capturing circuit (e.g. a sensor such as, for example, a CCD (or Charge-Coupled Device) or CMOS (or Complementary Metal-Oxide-Semiconductor)).

According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limiting embodiment, the encoding device 100 further comprises a computer program stored in the memory 120. The computer program comprises instructions which, when executed by the encoding device 100, in particular by the processor 110, enable make the encoding device 100 to execute the method described with reference to figure 2. According to a variant, the computer program is stored externally to the encoding device 100 on a non-transitory digital data support, e.g. on an external storage medium such as a HDD, CD-ROM, DVD, a read-only and/or DVD drive and/or a DVD Read/Write drive, all known in the art. The encoding device 100 thus comprises a mechanism to read the computer program. Further, the encoding device 100 could access one or more Universal Serial Bus (USB)-type storage devices (e.g., "memory sticks.") through corresponding USB ports (not shown).
According to exemplary and nonlimiting embodiments, the encoding device 100 can be, but is not limited to:

- a mobile device ;
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

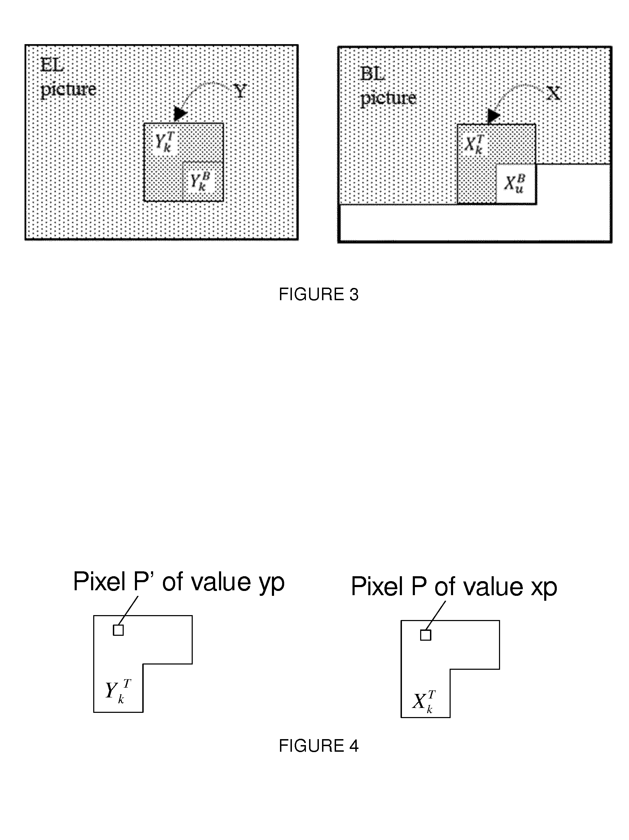

**Figure 2** represents a flowchart of a scalable encoding method for encoding at least one block of an enhancement layer picture according to an exemplary and non limiting embodiment of the present principles.
In step 10, prediction information is determined from at least a part of the enhancement layer picture spatially neighboring the at least one block of the enhancement layer picture, named current block, and from a collocated part in a reconstructed base layer picture. In an illustrative embodiment, the reconstructed base layer picture is collocated in time with the enhancement layer picture. **Figure 3** depicts a current block $Y_u^B$ in an enhancement layer picture and a spatially collocated block $X_k^B$ in a reconstructed (or decoded) base layer picture. On this figure the base layer picture is completely reconstructed while the enhancement layer picture is only partially reconstructed (the reconstructed part is represented in grey). It is known that encoding a picture block usually comprises reconstructing the picture block for a future use of the reconstructed block during prediction of another picture block. The part of the enhancement layer picture spatially neighboring the current block may be but is not necessarily adjacent to the current block. In figure 3, the part of the enhancement layer picture spatially neighboring the current block is $Y_k^T$ and the collocated part in the reconstructed base layer picture is $X_k^T$. The prediction information is determined from known data, i.e. the reconstructed parts $X_k^T$ and $Y_k^T$. In an exemplary embodiment, determining the prediction information comprises the step of associating, for each pixel in the part $Y_k^T$ of the enhancement layer picture, its value with the value of the collocated pixel in the part $X_k^T$ of the reconstructed base layer picture. **Figure 4** depicts a pixel P' in $Y_k^T$ that has a pixel value equal to yp and the collocated pixel P in $X_k^T$ that has a pixel value xp. The pixels P and P' have the same spatial positions in the part $X_k^T$ and $Y_k^T$ respectively.

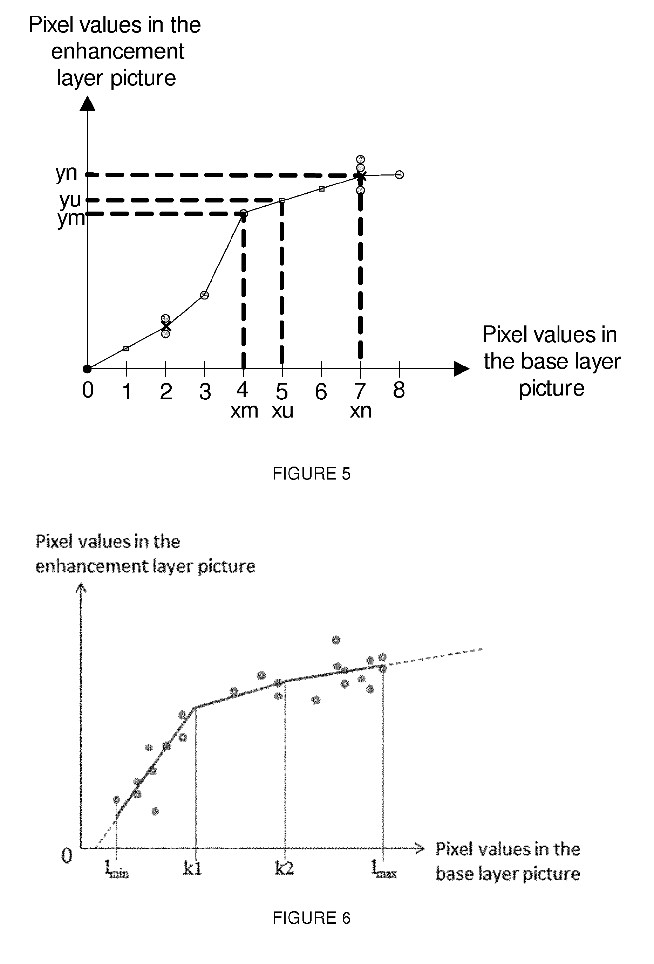

**Figure 5** depicts a graphical representation of prediction information, typically stored in a look-up table. The various abscissa of the graphical representation in figure 5 represent pixel values in the reconstructed base layer picture whereas the ordinates represent pixel values in the enhancement layer picture. In the case where the enhancement layer picture is an HDR picture and the base layer picture is an LDR picture, the prediction information may represent inverse tone mapping information, e.g. an inverse tone mapping curve. In figure 5, each dot represents an association of two values (e.g. xp, yp) of collocated pixels. In this figure, the value xp of pixel P in $X_k^T$ is associated with the value yp of pixel P' in $Y_k^T$. In an exemplary embodiment, a value of pixels in the part $X_k^T$ can be associated with a plurality of values in the part $Y_k^T$. Indeed, several pixels in $Y_k^T$ having different values may have collocated pixels in $X_k^T$ that have identical pixel values. In figure 5, the pixel value "2" is associated with two pixel values of the part $Y_k^T$. In this case, the plurality of pixel values are combined into a single value. In figure 5, the single pixel value is depicted by a cross. For example, the single value is equal to the mean of the plurality of pixel values. In a variant, the single value is the median of the plurality of pixel values.

In another embodiment, pixel values in the reconstructed base layer picture may be not present in the part $X_k^T$. In this case, the prediction information may be completed. In an exemplary embodiment, if the reconstructed base layer picture is represented by8 bits, the pixel values are in the range [0;255]. Some pixel values in this range may be absent from the part $X_k^T$ while present in $X_k^B$. In figure 5, the pixel value 0, 1, 5 and 6 are not present in $X_k^T$. The prediction information may thus be completed so that at least one pixel value is associated with each pixel value of the reconstructed base layer picture. In a variant, the prediction information may be completed so that at least one pixel value is associated with each pixel value of the block $X_k^B$. Indeed, ultimately the prediction information is used to transform the block $X_k^B$ in order to form a prediction block. The prediction information may be completed by interpolation of the unknown base layer pixel values. The interpolated values are represented by a square. In an exemplary embodiment, the value $y_u$ associated with $x_u$ can be computed using the following equation:

$$y_u = \left[ y_m + (x_u - x_m). \frac{y_n - y_m}{x_n - x_m} \right]$$

where $x_u$ is a pixel value of the reconstructed base layer picture for which the associated value $y_u$ in the enhancement layer is unknown;
$x_m$ and $x_n$ are respectively the previous and next values for which the associated values in the enhancement layer $y_m$ and $y_n$ are known.
It will be appreciated, however, that the present principles are not restricted to linear interpolation. In an exemplary embodiment,, cubic interpolation can be used instead. The result $y_u$ is rounded to obtain an integer value. In the example of Figure 5, the values associated with x=5 and x=6 are interpolated using the known values $y_m$ and $y_n$ associated with $x_m$=4 and $x_n$=7 respectively. However, the value associated with x=0 cannot be interpolated since there is no previous x value with a known y value. A simple way to solve this problem is to associate a default value with x= 0 in the case where its y value is unknown (i.e. in the case where there is no pixel with a value 0 in the part $X_k^T$). For the same reason, a default value may be associated with the highest x value (e.g. 255 in the case where the reconstructed base layer picture is represented on 8 bits and more generally $2^m$-1, where m is the bit depth of the reconstructed base layer picture). For example, the default values for the first and last x values can be set to 0 and $2^n$-1 respectively, where n is the bit depth of the enhancement layer picture. Figure 5 thus illustrates the look-up table after interpolation.
In a variant, the minimum and maximum values of the whole enhancement layer picture are used as default values for the lowest and highest x values. In this case, those values must be transmitted to the decoder for each frame.
**Figure 6** depicts the prediction information in the form of a linear spline. On this figure the spline is composed of 3 segments. It will be appreciated, however, that the present principles are not restricted to 3 segments but can be applied to 2 or more than 3 segments.

Given $I_{min}$ and $I_{max}$ : the minimum and maximum values in $X_k^T$, we must first define two interior knots $k1$ and $k2$ such that $I_{min} \leq k1 \leq k2 \leq I_{max}$. In the three intervals [$I_{min}$, $k1$], [$k1$,$k2$] and [$k2$, $I_{max}$], we must then fit the linear models $C_{I_{min} \rightarrow k1}$,

$C_{k1 \rightarrow k2}$ and $C_{k2 \rightarrow lmax}$ respectively, such that two consecutive models intersect exactly at the knot between the two intervals. This constraint can be expressed by the following equations :

$$C_{l_{min} \rightarrow k1}(k1) = C_{k1 \rightarrow k2}(k1) \tag{1}$$

$$C_{k1 \rightarrow k2}(k2) = C_{k2 \rightarrow l_{max}}(k2) \tag{2}$$

In practice, this linear spline fitting problem can be solved with linear least squares optimization :

Let $f_\alpha$ be the function defined by :

$$f_\alpha(x) = \alpha_0 + \alpha_1.x + \alpha_2.(x - k1)_+ + \alpha_3.(x - k2)_+$$

where,

$$(z)_+ = \begin{cases} z \ if \ z \geq 0 \\ 0 \ if \ z < 0 \end{cases}$$

The vector of coefficients $\alpha$ in the function $f_\alpha$ can be fitted to the data by solving the standard least squares problem :

$$\hat{\alpha} = argmin\left(\sum_{i=1}^{n}(f_\alpha(x_i) - y_i)^2\right) \tag{3}$$

where $n$ is the number of pixels in the training data (i.e. the number of pixels in the part $Y_k^T$ or $X_k^T$), and $x_i$ and $y_i$ are the values of a pixel i in the part $X_k^T$ of reconstructed base layer picture and in the part $Y_k^T$ of the enhancement layer picture respectively.

In the case where,

$$\begin{cases} \hat{C}_{l_{min} \rightarrow k1}(x) &= \hat{\alpha}_0 + \hat{\alpha}_1.x \\ \hat{C}_{k1 \rightarrow k2}(x) &= (\hat{\alpha}_0 - \hat{\alpha}_2.k1) + (\hat{\alpha}_1 + \hat{\alpha}_2).x \\ \hat{C}_{k2 \rightarrow l_{max}}(x) &= (\hat{\alpha}_0 - \hat{\alpha}_2.k1 - \hat{\alpha}_3.k2) + (\hat{\alpha}_1 + \hat{\alpha}_2 + \hat{\alpha}_3).x \end{cases} ,$$

then

$$\hat{f}_\alpha(x) = \begin{cases} \hat{C}_{l_{min} \rightarrow k1}(x), & if \ x \leq k1 \\ \hat{C}_{k1 \rightarrow k2}(x), & if \ k1 < x \leq k2 , \\ \hat{C}_{k2 \rightarrow l_{max}}(x), & if \ x > k2 \end{cases}$$

and the constraints (1) and (2) are satisfied by construction. Therefore, given the knots $k1$ and $k2$, $\hat{C}_{l_{min}\to k1}$, $\hat{C}_{k1\to k2}$ and $\hat{C}_{k2\to l_{max}}$ are the optimal linear models in the least square sense that satisfies the equations (1) and (2).

This model is more accurate than a single linear model. It also has better extrapolation properties. It is possible that some pixels in the block $X_k^B$ have a higher value than $l_{max}$. In this case, the last linear model ($\hat{C}_{k2\to l_{max}}$) has to be extended for those values. This model has been fitted to the highest known data points (i.e. above $k2$). As a result, it is more likely to be representative of the points with a high LDR value, than a single linear model fitted to the whole range $[l_{min}, l_{max}]$. The same remark applies for values lower than $l_{min}$. It will be appreciated, however, that the present principles are not restricted to linear curves or splines but may use polynomial curve.

In step 12, a block of the reconstructed base layer picture collocated with said at least one block of the enhancement layer picture is transformed, using the prediction information, to form a prediction block. Since the prediction is performed locally, the encoding remains efficient when the base layer picture is obtained from the enhancement layer picture using local tone mapping operators. The Transforming step could comprise inverse tone mapping of the block of the reconstructed base layer picture collocated with said current block of the enhancement layer picture using the prediction information, e.g. an inverse tone mapping information.

In a step 14, a residual block obtained from said at least one block of the enhancement layer picture and from said prediction block is encoded. Usually, the residual block is obtained by subtracting the prediction block from the current block of the enhancement layer picture. Encoding the residual block comprises transforming the residual block (e.g. by applying a Discrete Cosine Transform) into coefficients (in a frequency domain) which are in turn quantized. The quantized coefficients are usually entropy coded to form a bitstream. No additional information needs to be transmitted since the prediction information can be determined on the decoder side in the same way as it is determined on the encoder side.

In a exemplary and non-limiting embodiment, the encoding method is used with spatial scalability. In this case, the current block $Y_k^B$ and the part $Y_k^T$ are larger than the collocated block $X_k^B$ and the collocated part $X_k^T$ in the reconstructed base layer picture. In a first embodiment, the reconstructed base layer picture is upsampled to the same spatial resolution as the enhancement layer picture. Then, the prediction information is determined as indicated in step 10 using the upsampled reconstructed base layer picture.

In a variant, the prediction information is determined directly from the reconstructed base layer picture of low resolution. In this case, each pixel in $X_k^T$ corresponds to several pixels in $Y_k^T$. For example, in the case where the reconstructed base layer picture has both horizontal and vertical resolutions divided by two, then one pixel in $X_k^T$ corresponds to four pixels in $Y_k^T$. A simple approach in this case is to associate the four pixel values of $Y_k^T$ with the value of the corresponding pixel in $X_k^T$. When this is done for all the pixels in $X_k^T$, we obtain the graphical representation depicted in figure 5, where several y values are associated with one and the same x value. The steps of combination of a plurality of pixel values into one single value and of interpolation may then be applied. In a variant, the linear spline model may be applied.

When the prediction information is determined, it can be used to transform the upsampled version $X_k^{B\prime}$ of the block $X_k^B$ in order to form the prediction block. In a variant, the prediction information is used to transform the block $X_k^B$ which is in turn upsampled to form the prediction block.

The method of the present principles for encoding at least one block of an enhancement layer as discussed above may be part of a method for encoding a whole enhancement layer picture. In this case, the encoder will select, for each block of the picture, a coding mode among an inter-layer prediction mode (as disclosed previously) and classical inter an intra prediction mode.

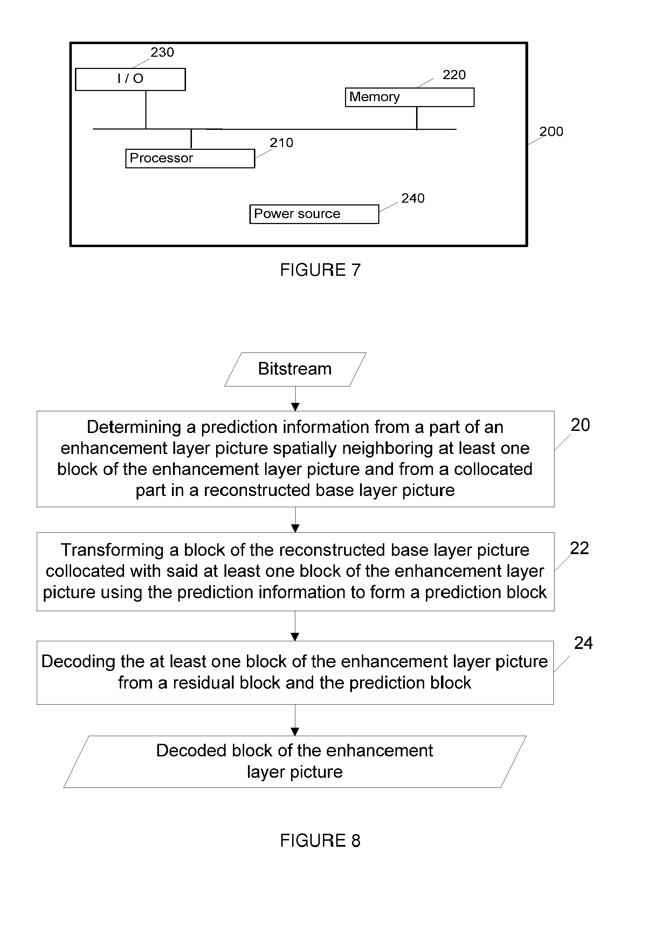

**Figure 7** represents an exemplary architecture of a decoding device 200 configured to decode at least one block of an enhancement layer picture from a bitstream according to an exemplary embodiment. The decoding device 200 comprises one or more processor(s) 210 , which could comprise , for example, a CPU, a GPU and/or a DSP along with internal memory 220 (e.g. RAM, ROM, EPROM). The decoding device 200 comprises one or more Input/Output interface(s) 230 adapted to display output information and/or allow a user to enter commands and/or data (e.g. a keyboard, a mouse, a touchpad, a webcam); and a power source 240 which may be external to the decoding device 200. The device 200 may also comprise one or more network interface(s) (not shown). The bitstream may be obtained from a source. According to different embodiments, the source can be, but is not limited to:

- a local memory, e.g. a video memory, a RAM, a flash memory, a hard disk ;
- a storage interface, e.g. an interface with a mass storage, a ROM, an optical disc or a magnetic support;

- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the decoded block may be sent to a destination, e.g. a display device. As an example, the decoded block is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and nonlimiting embodiment, the decoding device 200 further comprises a computer program stored in the memory 220. The computer program comprises instructions which, when executed by the decoding device 200, in particular by the processor 210, make the decoding device 200 carry out the method described with reference to figure 8. According to a variant, the computer program is stored externally to the decoding device 200 on a non-transitory digital data support, e.g. on an external storage medium such as a HDD, CD-ROM, DVD, a read-only and/or DVD drive and/or a DVD Read/Write drive, all known in the art. The decoding device 200 thus comprises an interface to read the computer program. Further, the decoding device 200 could access one or more Universal Serial Bus (USB)-type storage devices (e.g., "memory sticks.") through corresponding USB ports (not shown).

According to exemplary and non-limitative embodiments, the decoding device 200 can be, but is not limited to:

- a mobile device ;
- a communication device ;
- a game device ;
- a set top box;
- a TV set;
- a tablet (or tablet computer) ;
- a laptop ;
- a display and
- a decoding chip.

**Figure 8** represents a flowchart of a scalable decoding method for decoding at least one block of an enhancement layer picture according to an exemplary and non-limiting embodiment according to the present principles.

In step 20, prediction information is determined from at least a part of the enhancement layer picture spatially neighboring the at least one block of the enhancement layer picture, named current block, and from a collocated part in a decoded base layer picture. The decoded base layer picture is identical to the reconstructed base layer picture mentioned in the encoder side. In an exemplary embodiment, the decoded base layer picture is collocated in time with the enhancement layer picture. Figure 3 depicts a current block $Y_u^B$ in an enhancement layer picture and a spatially collocated block $X_k^B$ in a decoded base layer picture. In this figure the base layer picture is completely decoded while the enhancement layer picture is only partially decoded (the decoded part is represented in grey). The part of the enhancement layer picture spatially neighboring the current block may be but is not necessarily adjacent to the current block. In figure 3, the part of the enhancement layer picture spatially neighboring the current block is $Y_k^T$ and the collocated part in the decoded base layer picture is $X_k^T$. The prediction information is determined from known data, i.e. the decoded parts $X_k^T$ and $Y_k^T$. In an exemplary embodiment, determining the prediction information comprises associating, for each pixel in the part $Y_k^T$ of the enhancement layer picture, its value with the value of the collocated pixel in the part $X_k^T$ of the decoded base layer picture.

**Figure 4** depicts a pixel P' in $Y_k^T$ that has a pixel value equal to yp and the collocated pixel P in $X_k^T$ that has a pixel value xp. The pixels P and P' have the same spatial positions in the part $X_k^T$ and $Y_k^T$ respectively.

**Figure 5** depicts a graphical representation of the prediction information typically stored in a look-up table. The abscissa represent pixel values in the reconstructed base layer picture and the ordinates represent pixel values in the enhancement layer picture. In the case where the enhancement layer picture is an HDR picture and the base layer picture is an LDR picture, the prediction information may represent an inverse tone mapping information. In figure 5, each dot represent an association of two values (e.g. xp, yp) of collocated pixels. On this figure, the value xp of pixel P in $X_k^T$ is associated with the value yp of pixel P' in $Y_k^T$. In a specific embodiment, a value of pixels in the part $X_k^T$ can be associated with a plurality of values in the part $Y_k^T$. Indeed, several pixels in $Y_k^T$ having different values may have collocated pixels in $X_k^T$ that have identical pixel values. In figure 5, the pixel value 2 is associated with two pixel values of the part $Y_k^T$. In this case, the plurality of pixel values are combined into a single value. In figure 5, the single pixel value is depicted by a cross. The single value is for example equal to the mean of the plurality of pixel values. In a variant, the single value is the median of the plurality of pixel values.

In another embodiment, pixel values in the decoded base layer picture may be not present in the part $X_k^T$. In this case, the prediction information may be completed. In an exemplary embodiment,, if the decoded base layer picture is represented on 8 bits, the pixel values are in the range [0;255]. Some pixel values in this range may be absent from the part $X_k^T$ while present in $X_k^B$. In figure 5, the pixel value 0, 1, 5 and 6 are not present in $X_k^T$. The prediction information may thus be completed so that at least one pixel value is associated with each pixel value of the decoded base layer picture. In a variant, the prediction information may be completed so that at least one pixel value is associated with each pixel value of the block $X_k^B$. Indeed, ultimately the prediction information is used to transform the block $X_k^B$ in order to form a prediction block. The prediction information may be completed by interpolation of the unknown base layer pixel values. The interpolated values are represented by a square. In an exemplary embodiment,, the value $y_u$ associated with $x_u$ can be computed using the following equation:

$$y_u = \left[ y_m + (x_u - x_m) . \frac{y_n - y_m}{x_n - x_m} \right]$$

where $x_u$ is a pixel value of the reconstructed base layer picture for which the associated value $y_u$ in the enhancement layer is unknown;
$x_m$ and $x_n$ are respectively the previous and next values for which the associated values in the enhancement layer $y_m$ and $y_n$ are known. It will be appreciated, however, that the present principles are not restricted to linear interpolation. In an exemplary embodiment,, cubic interpolation can be used instead. The result $y_u$ is rounded to obtain an integer value. In the example of the Figure 5, the values associated with x=5 and x=6 are interpolated using the known values $y_m$ and $y_n$ associated with $x_m$=4 and $x_n$=7 respectively. However, the value associated with x=0 cannot be interpolated since there is no previous x value with a known y value. A simple way to solve this problem is to associate a default value with x= 0 in the case where its y value is unknown (i.e. in the case where there is no pixel with a value 0 in the part $X_k^T$).

For the same reason, a default value may be associated with the highest x value (e.g. 255 in the case where the decoded base layer picture is represented on 8 bits and more generally $2^m$-1, where m is the bitdepth of the decoded base layer picture). For example, the default values for the first and last x values can be set to 0 and $2^n$-1 respectively, where n is the bitdepth of the enhancement layer picture. Figure 5 thus illustrates the look-up table after interpolation.
In a variant, the minimum and maximum values of the whole enhancement layer picture are used as default values for the lowest and highest x values. In this case, those values must be transmitted to the decoder for each frame. **Figure 6** depicts the prediction information in the form of a linear spline. On this figure the spline is composed of 3 segments. It will be appreciated, however, that the present principles are not restricted to 3 segments but can be applied to 2 or more than 3 segments.

Given $l_{min}$ and $l_{max}$ : the minimum and maximum values in $X_k^T$, we must first define two interior knots $k1$ and $k2$ such that $l_{min} \leq k1 \leq k2 \leq l_{max}$. In the three intervals [$l_{min}$, $k1$], [$k1$,$k2$] and [$k2$, $l_{max}$], we must then fit the linear models $C_{l_{min} \to k1}$, $C_{k1 \to k2}$ and $C_{k2 \to l_{max}}$ respectively, such that two consecutive models intersect exactly at the knot between the two intervals. This constraint can be expressed by the following equations :

$$C_{l_{min}\to k1}(k1) = C_{k1\to k2}(k1) \tag{1}$$

$$C_{k1\to k2}(k2) = C_{k2\to l_{max}}(k2) \tag{2}$$

In practice, this linear spline fitting problem can be solved with linear least squares optimization :

Let $f_\alpha$ be the function defined by :

$$f_\alpha(x) = \alpha_0 + \alpha_1.x + \alpha_2.(x - k1)_+ + \alpha_3.(x - k2)_+$$

where,

$$(z)_+ = \begin{cases} z \ if \ z \geq 0 \\ 0 \ if \ z < 0 \end{cases}$$

The vector of coefficients $\alpha$ in the function $f_\alpha$ can be fitted to the data by solving the standard least squares problem :

$$\hat{\alpha} = argmin\left(\sum_{i=1}^{n}(f_\alpha(x_i) - y_i)^2\right) \tag{3}$$

where $n$ is the number of pixels in the training data (i.e. the number of pixels in the part $Y_k^T$ or $X_k^T$), and $x_i$ and $y_i$ are the values of a pixel i in the part $X_k^T$ of decoded base layer picture and in the part $Y_k^T$ of the enhancement layer picture respectively.

In the case where,

$$\begin{cases} \hat{C}_{l_{min}\to k1}(x) &= \hat{\alpha}_0 + \hat{\alpha}_1.x \\ \hat{C}_{k1\to k2}(x) &= (\hat{\alpha}_0 - \hat{\alpha}_2.k1) + (\hat{\alpha}_1 + \hat{\alpha}_2).x \\ \hat{C}_{k2\to l_{max}}(x) &= (\hat{\alpha}_0 - \hat{\alpha}_2.k1 - \hat{\alpha}_3.k2) + (\hat{\alpha}_1 + \hat{\alpha}_2 + \hat{\alpha}_3).x \end{cases},$$

then

$$\widehat{f_\alpha}(x) = \begin{cases} \hat{C}_{l_{min}\to k1}(x), & if \ x \leq k1 \\ \hat{C}_{k1\to k2}(x), & if \ k1 < x \leq k2, \\ \hat{C}_{k2\to l_{max}}(x), & if \ x > k2 \end{cases}$$

and the constraints (1) and (2) are satisfied by construction. Therefore, given the knots $k1$ and $k2$, $\hat{C}_{l_{min}\to k1}$, $\hat{C}_{k1\to k2}$ and $\hat{C}_{k2\to l_{max}}$ are the optimal linear models in the least square sense that satisfies the equations (1) and (2).

This model is more accurate than a single linear model. It also has better extrapolation properties. It is possible that some pixels in the block $Y_k^B$ have a higher value than $I_{max}$. In this case, the last linear model ($\hat{C}_{k2 \to I_{max}}$) has to be extended for those values. This model has been fitted to the highest known data points (i.e. above k2). As a result, it is more likely to be representative of the points with a high LDR value, than a single linear model fitted to the whole range $[I_{min}, I_{max}]$. The same remark applies for values lower than $I_{min}$.

It will be appreciated, however, that the present principles are not restricted to linear curves or splines but may use polynomial curve.

In step 22, a block of the decoded base layer picture collocated with said at least one block of the enhancement layer picture is transformed, using the prediction information, to form a prediction block. Transforming may occur by inverse tone mapping of the block of the decoded base layer picture collocated with said current block of the enhancement layer picture using the prediction information, e.g. an inverse tone mapping information. Since the prediction is performed locally, the encoding remains efficient when the base layer picture is obtained from the enhancement layer picture using local tone mapping operators.

In a step 24, the at least one block of the enhancement layer picture is decoded from a residual block and the prediction block. The at least one block of the enhancement layer picture is obtained by adding the prediction block to the residual block. The residual block is decoded from a bitstream. Decoding the residual block comprises entropy decoding coefficients (represented in a frequency domain), inverse quantizing the decoded coefficients and transforming (e.g. using an inverse Discrete Cosine Transform) the dequantized coefficients into a residual block (represented in a spatial domain).

In a specific and non-limiting embodiment, the decoding method is used with spatial scalability. In this case, the current block $Y_k^B$ and the part $Y_k^T$ are larger than the collocated block $X_k^B$ and the collocated part $X_k^T$ in the decoded base layer picture. In a first embodiment, the decoded base layer picture is upsampled to the same spatial resolution as the enhancement layer picture. Then, the prediction information is determined as indicated in step 10 using the upsampled decoded base layer picture.

In a variant, the prediction information is determined directly from the decoded base layer picture of low resolution. In this case, each pixel in $X_k^T$ corresponds to several pixels in $Y_k^T$. For example, in the case where the decoded base layer picture has both horizontal and vertical resolutions divided by two, then one pixel in $X_k^T$ corresponds to four pixels in $Y_k^T$. A simple approach in this case is to associate the four pixel values of $Y_k^T$ with the value of the corresponding pixel in $X_k^T$. When this is done for all the pixels in $X_k^T$, we obtain a graph, as in figure 5, where several y values are associated with one and the same x value. The steps of combination of a plurality of pixel values into one single value and of interpolation may then be applied. In a variant, the linear spline model may be applied. When the prediction information is determined, it can either be used to transform the upsampled version $X_k^{B\prime}$ of the block $X_k^B$ in order to form the prediction block. In a variant, the prediction information is used to transform the block $X_k^B$ which is in turn upsampled to form the prediction block.

The method disclosed for decoding at least one block of an enhancement layer may be part of a method for decoding a whole enhancement layer picture. In this case, the decoder decodes for each block of the picture a coding mode among an inter-layer prediction mode as disclosed previously and classical inter an intra prediction mode.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A scalable encoding method comprising for at least one block of an enhancement layer picture:

   - determining (10) prediction information from at least a part of the enhancement layer picture spatially neighboring said at least one block of the enhancement layer picture and from a collocated part in a reconstructed base layer picture;
   - transforming (12), using the prediction information, a block of the reconstructed base layer picture collocated with said at least one block of the enhancement layer picture to form a prediction block; and
   - encoding (14) a residual block obtained from said at least one block of the enhancement layer picture and from said prediction block.

2. The method according to claim 1, wherein determining said prediction information comprises associating, for each pixel in the part of the enhancement layer picture, the value of that pixel with the value of the collocated pixel in the image part of the reconstructed base layer picture.

3. The method according to claim 2, wherein in the case where different pixel values in the enhancement layer image part are associated with one and the same pixel value in the collocated base layer image part, the different pixel values are combined into a single value.

4. The method of claim 3, wherein the single value is one of a median or a mean value.

5. The method according to any of claims 2 to 4, wherein if the prediction information is incomplete, the method further comprises completing said prediction information by interpolation.

6. The method of claim 2, wherein determining said prediction information further comprises determining a linear spline from said associated values.

7. A scalable decoding method comprising for at least one block of an enhancement layer picture:

   - determining prediction information from an enhancement layer image part spatially neighboring said at least one block of the enhancement layer picture and from a collocated base layer image part in a decoded base layer picture;
   - transforming, using the prediction information, a block of the decoded base layer picture collocated with said at least one block of the enhancement layer picture to form a prediction block; and
   - decoding said at least one block of an enhancement layer picture from said prediction block and from a residual block.

8. The method according to claim 7, wherein determining said prediction information comprises associating, for each pixel in the part of the enhancement layer picture, the value of that pixel with the value of the collocated pixel in the image part of the reconstructed base layer picture.

9. The method according to claim 8, wherein if different pixel values in the enhancement layer image part are associated with a single pixel value in the collocated base layer image part, the different pixel values are combined into a single value.

10. The method of claim 9, wherein the single value is one of a median or a mean value.

11. The method of any of claims 8 to 10, wherein if the prediction information is incomplete, the method further comprise completing said information by interpolation.

12. The method of claim 8, wherein determining said prediction information further comprises determining a linear spline model from said associated values.

13. A scalable coding device comprising:

    - means for determining prediction information from at least a part of an enhancement layer picture spatially neighboring at least one block of an enhancement layer picture and from a collocated part in a reconstructed base layer picture;
    - means for transforming, using the prediction information, a block of the reconstructed base layer picture collocated with said at least one block of the enhancement layer picture to form a prediction block; and
    - means for encoding a residual block obtained from said at least one block of the enhancement layer picture and from said prediction block.

14. The scalable coding device according to claim 16, wherein said device is configured to execute the steps of the scalable coding method according to any of claims 1 to 6.

15. A scalable decoding device comprising:

    - means for determining prediction information from an enhancement layer image part spatially neighboring at least one block of an enhancement layer picture and from a collocated base layer image part in a decoded base layer picture;
    - means for transforming, using the prediction information, a block of the decoded base layer picture collocated with said at least one block of the enhancement layer picture to form a prediction block; and
    - means for decoding said at least one block of an enhancement layer picture from said prediction block and from a residual block.

16. The scalable decoding device according to claim 15, wherein said device is configured to execute the steps of the scalable decoding method according to any of claims 7 to 12.

FIGURE 1

Reconstructed base layer picture, enhancement layer picture

Determining a prediction information from a part of the enhancement layer picture spatially neighboring the at least one block of the enhancement layer picture and from a collocated part in a reconstructed base layer picture — 10

Transforming a block of the reconstructed base layer picture collocated with said at least one block of the enhancement layer picture using the prediction information to form a prediction block — 12

Coding a residual block obtained from said at least one block of the enhancement layer picture and from said prediction block — 14

Bitstream

FIGURE 2

15

FIGURE 3

FIGURE 4

Pixel values in the
enhancement
layer picture

FIGURE 5

Pixel values in the
enhancement layer picture

FIGURE 6

FIGURE 7

Bitstream

Determining a prediction information from a part of an
enhancement layer picture spatially neighboring at least one
block of the enhancement layer picture and from a collocated
part in a reconstructed base layer picture
20

Transforming a block of the reconstructed base layer picture
collocated with said at least one block of the enhancement layer
picture using the prediction information to form a prediction block
22

Decoding the at least one block of the enhancement layer picture
from a residual block and the prediction block
24

Decoded block of the enhancement
layer picture

FIGURE 8

Europäisches
Patentamt

European
Patent Office

Office européen
des brevets

# EUROPEAN SEARCH REPORT

Application Number

EP 14 30 6911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/053512 A1 (FRAUNHOFER GES ZUR FÖRDERUNG DER ANGEWANDTEN FORSCHUNG E V [DE]) 10 April 2014 (2014-04-10) * page 34, line 16 - line 17 * * page 55, line 12 - line 28 * * page 74, line 4 - line 28 * * page 75, line 10 - line 14 * * page 114, line 28 - line 35 * ----- | 1-16 | INV. H04N19/33 |
| A | US 2014/301487 A1 (LAROCHE GUILLAUME [FR] ET AL) 9 October 2014 (2014-10-09) * paragraph [0277] - paragraph [0280] * ----- | 1-16 | |
| A | US 2014/092977 A1 (LAINEMA JANI [FI] ET AL) 3 April 2014 (2014-04-03) * paragraph [0190] * ----- | 1-16 | |

TECHNICAL FIELDS
SEARCHED (IPC)

H04N

The present search report has been drawn up for all claims

| Place of search | Date of completion of the search | Examiner |
|---|---|---|
| Munich | 22 May 2015 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6911

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2015

| Patent document cited in search report | Publication date | Patent family member(s) | Publication date |
|---|---|---|---|
| WO 2014053512 A1 | 10-04-2014 | WO 2014053512 A1<br>WO 2014053514 A1<br>WO 2014053517 A1<br>WO 2014053518 A1<br>WO 2014053519 A1 | 10-04-2014<br>10-04-2014<br>10-04-2014<br>10-04-2014<br>10-04-2014 |
| US 2014301487 A1 | 09-10-2014 | GB 2512827 A<br>US 2014301487 A1 | 15-10-2014<br>09-10-2014 |
| US 2014092977 A1 | 03-04-2014 | US 2014092977 A1<br>WO 2014049210 A1 | 03-04-2014<br>03-04-2014 |

EPO FORM P0459

For more details about this annex : see Official Journal of the European Patent Office, No. 12/82